# EUROPEAN PATENT APPLICATION

(11) **EP 4 668 836 A1**
(43) Date of publication of application: **24.12.2025**
(21) Application number: 24756186.3
(22) Date of filing: 07.02.2024
(51) Int. Cl.: H04W 24/10

(54) **INFORMATION REPORTING METHOD AND APPARATUS, INFORMATION RECEIVING METHOD AND APPARATUS, TERMINAL, AND NETWORK SIDE DEVICE**

(30) Priority: 16.02.2023 CN 202310133789
(71) Applicant: Vivo Mobile Communication Co., Ltd., Dongguan, Guangdong 523863 (CN)
(72) Inventor: SUN, Yanliang, Dongguan, Guangdong 523863 (CN); BAO, Wei, Dongguan, Guangdong 523863 (CN)
(74) Representative: Lavoix
(86) International application number: PCT/CN2024/076504
(87) International publication number: WO 2024/169813

(57) **Abstract**

This application discloses an information reporting method and apparatus, an information receiving method and apparatus, a terminal, and a network-side device, pertaining to the field of communication technologies. The information reporting method of embodiments of this application includes: performing, by a terminal, measurement on a target cell based on a first configuration, to obtain a measurement result; and reporting the measurement result in a case that a first event is satisfied; where the first event includes: the terminal receives first signaling, and within a first duration after reception of the first signaling, the terminal obtains through measurement that signal quality of the target cell satisfies a first condition.

## Description

### CROSS-REFERENCE TO RELATED APPLICATIONS

This application claims priority to Chinese Patent Application No. 202310133789.7, filed in China on February 16, 2023, which is incorporated herein by reference in its entirety.

### TECHNICAL FIELD

This application pertains to the field of communication technologies, and specifically relates to an information reporting method and apparatus, an information receiving method and apparatus, a terminal, and a network-side device.

### BACKGROUND

Radio resource management (Radio Resource Management, RRM) measurements include both layer 3 (Layer 3, L3) measurements and layer 1 (Layer 1, L1) measurements. A terminal is required to report an L3 measurement result to a base station based on an L3 measurement. Subsequently, the base station, based on the L3 measurement result, indicates and accomplishes a cell change (which broadly refers to handover, redirection, secondary cell loading/activation, primary secondary cell loading/activation, or the like). During or after this process, the base station may, as needed, further issue an L1 measurement configuration for a corresponding cell, to indicate the terminal to perform an L1 measurement and determine optimal uplink and downlink beam pairing based on an L1 measurement result of the terminal. Consequently, during a cell change process, beam management may not be performed in a timely manner, leading to a cell performance loss.

### SUMMARY

Embodiments of this application provide an information reporting method and apparatus, an information receiving method and apparatus, a terminal, and a network-side device, to solve a problem of cell performance loss caused during a current cell change process.

According to a first aspect, an information reporting method is provided, including:
performing, by a terminal, measurement on a target cell based on a first configuration, to obtain a measurement result; and
reporting, by the terminal, the measurement result in a case that a first event is satisfied; where
the first event includes: the terminal receives first signaling, and within a first duration after reception of the first signaling, the terminal obtains through measurement that signal quality of the target cell satisfies a first condition.

According to a second aspect, an information receiving method is provided, including:
receiving, by a network-side device, a measurement result; where
the measurement result is obtained by performing measurement on a target cell based on a first configuration; the measurement result is reported in a case that a first event is satisfied; and the first event includes: the terminal receives first signaling, and within a first duration after reception of the first signaling, the terminal obtains through measurement that signal quality of the target cell satisfies a first condition.

According to a third aspect, an information reporting apparatus is provided and applied to a terminal, including:
a measurement module, configured to perform measurement on a target cell based on a first configuration, to obtain a measurement result; and
a reporting module, configured to report the measurement result in a case that a first event is satisfied; where
the first event includes: the terminal receives first signaling, and within a first duration after reception of the first signaling, the terminal obtains through measurement that signal quality of the target cell satisfies a first condition.

According to a fourth aspect, an information receiving apparatus is provided and applied to a network-side device, including:
a third receiving module, configured to receive a measurement result; where
the measurement result is obtained by performing measurement on a target cell based on a first configuration; the measurement result is reported in a case that a first event is satisfied; and the first event includes: the terminal receives first signaling, and within a first duration after reception of the first signaling, the terminal obtains through measurement that signal quality of the target cell satisfies a first condition.

According to a fifth aspect, a terminal is provided. The terminal includes a processor and a memory. The memory stores a program or instructions capable of running on the processor. When the program or instructions are executed by the processor, the steps of the method according to the first aspect are implemented.

According to a sixth aspect, a terminal is provided, including a processor and a communication interface. The processor is configured to perform measurement on a target cell based on a first configuration to obtain a measurement result. The communication interface is configured to report the measurement result in a case that a first event is satisfied. The first event includes: a terminal receives first signaling, and within a first duration after reception of the first signaling, the terminal obtains through measurement that signal quality of the target cell satisfies a first condition.

According to a seventh aspect, a network-side device is provided. The network-side device includes a processor and a memory. The memory stores a program or instructions capable of running on the processor. When the program or instructions are executed by the processor, the steps of the method according to the second aspect are implemented.

According to an eighth aspect, a network-side device is provided, including a processor and a communication interface. The communication interface is configured to receive a measurement result. The measurement result is obtained by performing measurement on a target cell based on a first configuration; the measurement result is reported in a case that a first event is satisfied; and the first event includes: the terminal receives first signaling, and within a first duration after reception of the first signaling, the terminal obtains through measurement that signal quality of the target cell satisfies a first condition.

According to a ninth aspect, a communication system is provided, including a terminal and a network-side device. The terminal may be configured to execute the steps of the information reporting method according to the first aspect, and the network-side device may be configured to execute the steps of the information receiving method according to the second aspect.

According to a tenth aspect, a readable storage medium is provided. The readable storage medium stores a program or instructions. When the program or instructions are executed by a processor, the steps of the method according to the first aspect are implemented, or the steps of the method according to the second aspect are implemented.

According to an eleventh aspect, a chip is provided. The chip includes a processor and a communication interface, the communication interface is coupled to the processor, and the processor is configured to run a program or instructions to implement the steps of the method according to the first aspect or the steps of the method according to the second aspect.

According to a twelfth aspect, a computer program/program product is provided. The computer program/program product is stored in a storage medium, and the computer program/program product is executed by at least one processor to implement the steps of the method according to the first aspect or the steps of the method according to the second aspect.

In the embodiments of this application, the terminal can perform measurement on the target cell based on the first configuration to obtain the measurement result and report the measurement result in the case that the first event is satisfied, where the first event includes: the terminal receives the first signaling, and within a first duration after reception of the first signaling, the terminal obtains through measurement that signal quality of the target cell satisfies the first condition. Thus, when the first event is satisfied, the reporting of the measurement result can be quickly triggered, which helps mitigate cell performance loss caused by untimely beam management during cell handover from the perspective of terminal measurement.

### BRIEF DESCRIPTION OF DRAWINGS

FIG. 1 is a block diagram of a wireless communication system to which embodiments of this application are applicable;
FIG. 2 is a flowchart of an information reporting method according to an embodiment of this application;
FIG. 3 is a flowchart of an information receiving method according to an embodiment of this application;
FIG. 4 is a schematic diagram of a cell change process according to an embodiment of this application;
FIG. 5A is a first schematic diagram of reporting of a measurement result according to an embodiment of this application;
FIG. 5B is a second schematic diagram of reporting of a measurement result according to an embodiment of this application;
FIG. 5C is a third schematic diagram of reporting of a measurement result according to an embodiment of this application;
FIG. 5D is a fourth schematic diagram of reporting of a measurement result according to an embodiment of this application;
FIG. 6 is a schematic structural diagram of an information reporting apparatus according to an embodiment of this application;
FIG. 7 is a schematic structural diagram of an information receiving apparatus according to an embodiment of this application;
FIG. 8 is a schematic structural diagram of a communication device according to an embodiment of this application;
FIG. 9 is a schematic structural diagram of a terminal according to an embodiment of this application; and
FIG. 10 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are merely some rather than all of the embodiments of this application. All other embodiments obtained by persons of ordinary skill in the art based on the embodiments of this application fall within the protection scope of this application.

The terms "first", "second", and the like in the specification and claims of this application are used to distinguish between similar objects rather than to describe a specific order or sequence. It should be understood that terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited, for example, there may be one or more first objects. In addition, "or" in the specification and claims represents at least one of connected objects, and the character "/" generally indicates that the contextually associated objects have an "or" relationship. For example, "A or B" includes three cases, that are, case 1: including A but no B; case 2: including B but no A; and case 3: including both A and B.

It is worth noting that the technology described in the embodiments of this application is not limited to long term evolution (Long Term Evolution, LTE)/LTE-Advanced (LTE-Advanced, LTE-A) systems, and may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as in other systems and radio technologies. In the following descriptions, a new radio (New Radio, NR) system is described for an illustration purpose, NR terms are used in most of the following descriptions, and these technologies may also be applied to other applications than the NR system application, for example, the 6^{th} generation (6^{th} Generation, 6G) communication system.

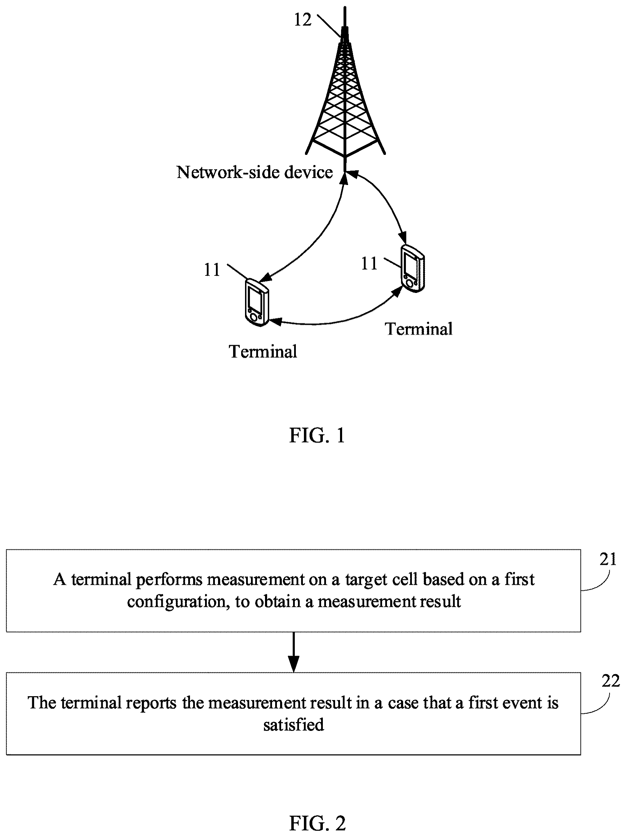

FIG. 1 is a block diagram of a wireless communication system to which the embodiments of this application are applicable. The wireless communication system includes a terminal 11 and a network-side device 12. The terminal may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart appliance (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, or the like. It should be noted that a specific type of the terminal 11 is not limited in the embodiments of this application. The network-side device 12 may include an access network device or core network device, where the access network device may also be referred to as a radio access network device, a radio access network (Radio Access Network, RAN), a radio access network function, or a radio access network unit. The access network device may include base stations, wireless local area network (Wireless Local Area Network, WLAN) access points, Wi-Fi nodes, or the like. The base station can be referred to as Node B, evolved Node B (eNB), access point, base transceiver station (Base Transceiver Station, BTS), radio base station, radio transceiver, basic service set (Basic Service Set, BSS), extended service set (Extended Service Set, ESS), home Node B, home evolved Node B, transmitting receiving point (Transmitting Receiving Point, TRP), or other appropriate terms in the field. As long as the same technical effects are achieved, the base station is not limited to any specific technical terminology. It should be noted that in the embodiments of this application, only the base station in the NR system is introduced as an example, and the specific type of the base station is not limited.

It should be noted that the term "indicate" in the specification and claims of this application may refer to either an explicit indication or an implicit indication. The explicit indication may be understood as that a sender clearly informs a receiver of an operation to be performed or a result of a request in a sent indication; and the implicit indication may be understood as that the receiver makes a judgment based on the indication sent by the sender and determines, based on a judgment result, the operation to be performed or the result of the request.

The following describes in detail an information reporting method and apparatus, an information receiving method and apparatus, a terminal, and a network-side device provided in the embodiments of this application by using some embodiments and application scenarios thereof with reference to the accompanying drawings.

Refer to FIG. 2. FIG. 2 is a flowchart of an information reporting method according to an embodiment of this application. The method is executed by a terminal, and as shown in FIG. 2, the method includes the following steps.

Step 21. A terminal performs measurement on a target cell based on a first configuration, to obtain a measurement result.

Step 22. The terminal reports the measurement result in a case that a first event is satisfied.

The first event herein includes: the terminal receives first signaling, and within a first duration after reception of the first signaling, the terminal obtains through measurement that signal quality of the target cell satisfies a first condition. To be specific, in the case that the first event is satisfied, the terminal reports a valid measurement result. In a case that the first event is not satisfied, the terminal may report an invalid measurement result at a reporting occasion determined based on the first duration. A size of the first duration is determined based on a network configuration or a predefined value, for example, the size of the first duration may be directly configured by a network, or the size of the first duration may be determined based on the predefined value. The target cell is a measurement object, that is, the measured target cell.

Optionally, the first configuration is a configuration related to an L3 measurement, such as an L3 measurement reporting configuration.

Optionally, the target cell may include at least one of the following: a candidate target cell for handover, a secondary cell in a carrier aggregation (Carrier Aggregation, CA) scenario, and the like. For example, the candidate target cell may be a secondary cell in a CA scenario.

Optionally, the first signaling includes at least one of the following:
activation signaling for a secondary cell of the target cell, which allows direct activation of the secondary cell or allows quick reporting of a measurement result (such as an L3 measurement result) after the activation signaling for the secondary cell is received, allowing a base station to configure a transmission configuration indicator (Transmission Configuration Indicator, TCI), thereby facilitating reporting of a channel quality indicator (Channel quality indicator, CQI) by the terminal, and the like;
activation signaling for lower-layer triggered handover, for example, the activation signaling is activation signaling for L1/L2 triggered handover; and
lower-layer reporting trigger signaling for an L3 measurement, for example, the lower-layer reporting trigger signaling is L1/L2 reporting trigger signaling.

Optionally, the first condition may include at least one of the following: a difference between signal quality of the target cell and signal quality of a specific signal of a serving cell is higher than a first threshold; a difference between signal quality of a measurement signal for the target cell and signal quality of a specific signal of a serving cell is higher than a second threshold; signal quality of the target cell and/or signal quality of a measurement signal for the target cell is higher than a third threshold; and signal quality of a serving cell and/or signal quality of a specific signal of the serving cell is lower than a fourth threshold. The measurement signal for the target cell herein may be, for example, a synchronization signal block (Synchronization Signal Block, SSB)/channel state information reference signal (Channel State Information Reference Signal, CSI-RS), and correspondingly, the specific signal is a specific SSB/CSI-RS of the serving cell. The specific SSB/CSI-RS may be the optimal SSB/CSI-RS of the serving cell or an SSB of the serving cell on the same quasi co-location (Quasi co-location, QCL) relationship chain as a currently activated transmission configuration indicator (Transmission Configuration Indicator, TCI), and an associated L3 CSI-RS.

It should be noted that the first threshold, the second threshold, the third threshold, and the fourth threshold may be set based on actual needs, which are not limited herein.

According to the information reporting method in this embodiment of this application, the target cell may be measured based on the first configuration to obtain the measurement result and report the measurement result in the case that the first event is satisfied, where the first event includes: the terminal receives the first signaling, and within a first duration after reception of the first signaling, the terminal obtains through measurement that signal quality of the target cell satisfies the first condition. Thus, when the first event is satisfied, the reporting of the measurement result can be quickly triggered, which helps mitigate performance loss caused by untimely beam management during cell handover from the perspective of terminal measurement.

For example, in an example in which the first configuration is a configuration related to an L3 measurement and the measurement performed is the L3 measurement, with the solution in this application, the terminal still performs the L3 measurement on a corresponding frequency point/cell, but can report a result corresponding to the L3 measurement in a media access control control element (Media Access Control Control Element, MAC CE) or uplink control information (Uplink Control Information, UCI) according to an indication from a network. This process has the benefits that: on the one hand, in terms of a measurement-related terminal behavior, a terminal behavior assumption of the L3 measurement, including a beam used, synchronization assumption, and the like, can still be used, and even corresponding indicators can still be used, with minimal impact on a measurement behavior of a traditional terminal and with low implementation difficulty for the terminal; on the other hand, after lower-layer signaling such as L1/L2 signaling is received, earlier measurement can be quickly triggered, effectively addressing the timeliness issue of the L3 measurement, accelerating interaction between the network and the terminal, and allowing the network to directly trigger, based on the L3 measurement, a second stage of beam management process, thereby mitigating performance loss caused by untimely beam management during cell handover in massive antenna deployment scenarios from the perspective of terminal measurement.

Optionally, the reporting the measurement result may include:
reporting, by the terminal, the measurement result at a reporting occasion that is determined based on the first duration after reception of the first signaling. That is, the reporting occasion is determined based on the first duration after the first signaling is received. This can ensure timely reporting of the measurement result.

In some embodiments, a method for determining the reporting occasion based on the first duration after reception of the first signaling may include, but is not limited to, the following two methods: (1) the network configures the size of the first duration, and the terminal, after reception of the first signaling (for example, lower-layer reporting trigger signaling for the L3 measurement), reports the measurement result after an interval of the first duration, to be specific, an interval between a reception time of the first signaling and a reporting time corresponding to the reporting occasion is the first duration; and (2) the network configures a first timer corresponding to the first duration; the terminal, after reception of the first signaling (for example, lower-layer reporting trigger signaling for the L3 measurement), reports the measurement result before the timer expires (expire), to be specific, the first duration is a maximum duration interval between the reception time of the first signaling and the reporting time of the measurement result; and the terminal determines the reporting occasion based on its own measurement state and reports the measurement result at the reporting occasion determined by itself.

Optionally, the reporting the measurement result may include:
reporting, by the terminal, the measurement result based on at least one of the following:
uplink media access control control element (Media Access Control Control Element (Media Access Control Control Element, MAC CE)), and uplink control information (Uplink Control Information, UCI).

Optionally, the performing measurement on a target cell satisfies at least one of the following:
performing measurement on the target cell after reception of the first signaling, that is, triggering the measurement of the target cell by the first signaling (for example, lower-layer reporting trigger signaling for the L3 measurement) to quickly complete the relevant measurement; and
performing measurement on the target cell preferentially within the first duration after reception of the first signaling. Thus, the corresponding measurement can be completed within a required measurement time.

In this embodiment of this application, after reporting the measurement result, the terminal may receive second signaling, where the second signaling is used to indicate the terminal to perform a first operation, and the first operation may include at least one of the following:
activating the target cell, where the target cell is, for example, a candidate target cell for handover or a secondary cell in a CA scenario;
activating the target cell and a TCI for the target cell, where the TCI is a TCI used for uplink and downlink transmission on the target cell, and the uplink and downlink transmission is, for example, transmission on physical downlink shared channel (Physical Downlink Shared Channel, PDSCH), physical downlink control channel (Physical Downlink Control Channel, PDCCH), physical uplink shared channel (Physical Uplink Shared Channel, PUSCH), physical uplink control channel (Physical Uplink Control Channel, PUCCH), or the like; and
changing the primary cell or primary secondary cell in which the terminal is located to the target cell, for example, changing a current primary cell or primary secondary cell (PSCell) to a candidate target cell for handover, where the candidate target cell may be a secondary cell in a CA scenario.

Optionally, the activating the target cell may include at least one of the following:
establishing synchronization in the target cell, where for example, the establishing synchronization at least includes establishing downlink synchronization in the target cell; and
performing an L1 measurement on the target cell, where for example, this L1 measurement includes, but is not limited to, at least one of the following measurements performed by the terminal: layer 1 reference signal received power (Reference Signal Received Power, L1-RSRP) measurement and layer 1 signal to interference plus noise ratio (Layer 1 Signal to Interference plus Noise Ratio, L1-SINR) measurement.

Thus, with the solution in this application, an association can be established between the L3 measurement and L1 measurement of the terminal and beam management, ensuring that the network can obtain in a timely manner an L3 measurement result that has been obtained by the terminal, and promptly notify the terminal to start and terminate the L1 measurement or accelerate a beam management process on the target cell, thereby leveraging the advantage that L3 measurements cover a plurality of frequency points and cells with low overheads as well as the advantage that L1 measurements have good timeliness.

Optionally, the second signaling is downlink L1/L2 signaling, which may include, but is not limited to, at least one of the following:
downlink MAC CE, and downlink control information (Downlink Control Information, DCI).

In some embodiments, the downlink MAC CE may be used to indicate the terminal to activate the target cell, or indicate the terminal to activate the target cell and the TCI for the target cell, or indicate the terminal to change a current primary cell or primary secondary cell (Primary SCG Cell, PSCell) to a candidate target cell for handover.

In this embodiment of this application, when reporting the measurement result, the terminal may report validity of the measurement result. The terminal may send first indication information, where the first indication information is used to indicate whether the reported measurement result is valid or invalid, thereby enabling the network-side device to learn about the validity of the received measurement result.

In some embodiments, the first indication information may be a one-bit indicator or a set of predefined reporting identifiers. For example, when -Inf is reported, it indicates that the measurement result is invalid. Herein, -Inf represents reporting of a minimum value in a predefined measurement result value bit mapping table, such as "RSRP < - 156 dBm", or the like.

Optionally, for the measurement result reported by the terminal, the measurement result is valid in a case that the terminal obtains the measurement result within a second duration before reporting and a second condition is satisfied, where the second condition includes at least one of the following:
during measurement on the target cell, a signal-to-noise ratio corresponding to a measurement signal for the measurement is greater than or equal to a predefined threshold; and
the measurement result satisfies a predefined condition, where the measurement result includes, but is not limited to, any one of reference signal received power (Reference Signal Received Power, RSRP), reference signal received quality (Reference Signal Received Quality, RSRQ), and signal-to-interference-plus-noise ratio (Signal to Interference plus Noise Ratio, SINR); and the predefined condition is, for example, the RSRP being greater than the predefined threshold.

Optionally, the second duration may be configured by the network or predefined.

In this embodiment of this application, to smoothly perform reporting of the measurement result, the terminal may receive a second configuration, where the second configuration is used for configuring at least one of the following:
a frequency point and codepoint (codepoint) mapping relationship in the first signaling (for example, downlink MAC CE), or a measurement object (Measurement Object, MO) index and codepoint (codepoint) mapping relationship in the first signaling (for example, downlink MAC CE);
a size of the first duration;
indication information carried in a measurement report of the terminal and used to indicate whether the reported measurement result is valid or invalid;
a reporting format of the measurement report; and
the first condition, where the first condition may include at least one of the following: a difference between signal quality of the target cell and signal quality of a specific signal of a serving cell is higher than a first threshold; a difference between signal quality of a measurement signal for the target cell and signal quality of a specific signal of a serving cell is higher than a second threshold; signal quality of the target cell and/or signal quality of a measurement signal for the target cell is higher than a third threshold; and signal quality of a serving cell and/or signal quality of a specific signal of the serving cell is lower than a fourth threshold. Herein, the measurement signal for the target cell is, for example, an SSB/CSI-RS, and correspondingly, the specific signal is a specific SSB/CSI-RS of the serving cell. The specific SSB/CSI-RS may be an optimal SSB/CSI-RS of the serving cell or an SSB of the serving cell on the same QCL relationship chain as a currently activated TCI, and an associated L3 CSI-RS.

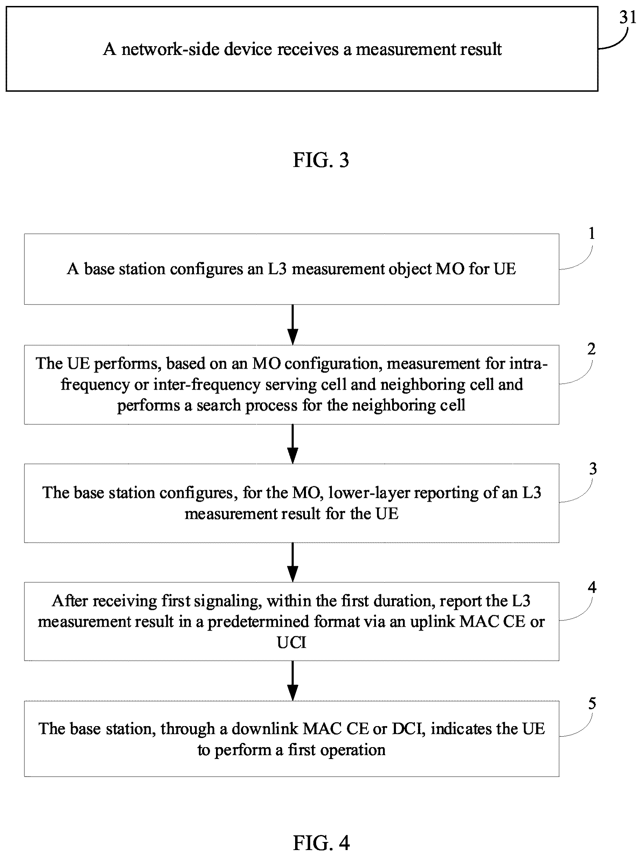

Refer to FIG. 3. FIG. 3 is a flowchart of an information receiving method according to an embodiment of this application. The method is executed by a network-side device, and as shown in FIG. 3, the method includes the following steps.

Step 31. The network-side device receives a measurement result.

The measurement result is obtained by performing measurement on a target cell based on a first configuration; and the measurement result is reported in a case that a first event is satisfied. The first event includes: the terminal receives first signaling, and within a first duration after reception of the first signaling, the terminal obtains through measurement that signal quality of the target cell satisfies a first condition. To be specific, in the case that the first event is satisfied, the terminal reports a valid measurement result. A size of the first duration is determined based on a network configuration or a predefined value, for example, the size of the first duration may be directly configured by a network, or the size of the first duration may be determined based on the predefined value. The target cell is a measurement object, that is, the measured target cell.

Optionally, the measurement result is reported, in the case that the first event is satisfied, at a reporting occasion that is determined based on the first duration after reception of the first signaling.

Optionally, the first configuration is a configuration related to an L3 measurement, such as an L3 measurement reporting configuration.

Optionally, the target cell may include at least one of the following: a candidate target cell for handover, a secondary cell in a carrier aggregation CA scenario, and the like. For example, the candidate target cell may be a secondary cell in a CA scenario.

In some embodiments, the measurement result may be reported through an uplink MAC CE or UCT.

Thus, when the first event is satisfied, the reporting of the measurement result can be quickly triggered, which helps mitigate performance loss caused by untimely beam management during cell handover from the perspective of terminal measurement. For instance, in an example in which the first configuration is a configuration related to an L3 measurement and the measurement performed is the L3 measurement, with the solution in this application, the terminal still performs the L3 measurement on a corresponding frequency point/cell, but can report a result corresponding to the L3 measurement in the MAC CE or UCI according to an indication from the network. This process has the benefits that: on the one hand, in terms of a measurement-related terminal behavior, a terminal behavior assumption of the L3 measurement, including a beam used, synchronization assumption, and the like, can still be used, and even corresponding indicators can still be used, with minimal impact on a measurement behavior of a traditional terminal and with low implementation difficulty for the terminal; on the other hand, after lower-layer signaling such as L1/L2 signaling is received, earlier measurement can be quickly triggered, effectively addressing the timeliness issue of the L3 measurement, accelerating interaction between the network and the terminal, and allowing the network to directly trigger, based on the L3 measurement, a second stage of beam management process, thereby mitigating the problem of performance loss caused by untimely beam management during cell handover in massive antenna deployment scenarios from the perspective of terminal measurement.

Optionally, the first signaling includes at least one of the following:
activation signaling for a secondary cell of the target cell, which allows direct activation of the secondary cell or allows quick reporting of a measurement result (such as an L3 measurement result) after the activation signaling for the secondary cell is received, allowing a base station to configure a TCI, thereby facilitating reporting of a CQI by the terminal, and the like;
activating the target cell, where the target cell is, for example, a candidate target cell for handover or a secondary cell in a CA scenario;
activating the target cell and a TCI for the target cell, where the TCI is a TCI used for uplink and downlink transmission on the target cell, and the uplink and downlink transmission is, for example, PDSCH transmission, PDCCH transmission, PUSCH transmission, or PUCCH transmission; and
changing the primary cell or primary secondary cell in which the terminal is located to the target cell, for example, changing a current primary cell or primary secondary cell (PSCell) to a candidate target cell for handover, where the candidate target cell may be a secondary cell in a CA scenario.

Optionally, the activating the target cell may include at least one of the following:
establishing synchronization in the target cell, for example, the establishing synchronization at least includes establishing downlink synchronization in the target cell; and
performing L1 measurement on the target cell, for example, the L1 measurement includes, but is not limited to, at least one of the following measurements performed by the terminal: L1-RSRP measurement and L1-SINR measurement.

Thus, with the solution in this application, an association can be established between the L3 measurement and L1 measurement of the terminal and beam management, ensuring that the network can timely obtain an L3 measurement result that has been obtained by the terminal, and promptly notify the terminal to start and terminate the L1 measurement or accelerate a beam management process on the target cell, thereby leveraging the advantage that L3 measurements cover a plurality of frequency points and cells with low overhead as well as the advantage that L1 measurements have good timeliness.

Optionally, the second signaling may include, but is not limited to, at least one of the following:
downlink MAC CE and downlink control information DCI.

In this embodiment of this application, when reporting the measurement result, the terminal may report validity of the measurement result. While receiving the measurement result, the network-side device can receive first indication information, where the first indication information is used to indicate whether the measurement result is valid or invalid.

In some embodiments, the first indication information may be a one-bit indicator or a set of predefined reporting identifiers. For example, when -Inf is reported, it indicates that the measurement result is invalid. Herein, -Inf represents reporting of a minimum value in a predefined measurement result value bit mapping table, such as "RSRP < - 156 dBm", or the like.

In this embodiment of this application, to smoothly perform reporting of the measurement result, the network-side device may send a second configuration to the terminal, where the second configuration is used for configuring at least one of the following:
a frequency point and codepoint (codepoint) mapping relationship in the first signaling (for example, downlink MAC CE), or a measurement object (MO) index and codepoint (codepoint) mapping relationship in the first signaling (for example, downlink MAC CE). It should be noted that the measurement object index and codepoint mapping relationship herein also includes an indirect mapping between an MO index and a MAC CE codepoint. For example, the measurement object index and codepoint mapping relationship is configured through a direct mapping between the MAC CE codepoint and a measurement configuration set and a mapping between the measurement configuration set and the measurement object;
a size of the first duration;
indication information carried in a measurement report of the terminal and used to indicate whether the reported measurement result is valid or invalid;
a reporting format of the measurement report; and
the first condition, where the first condition may include at least one of the following: a difference between signal quality of the target cell and signal quality of a specific signal of a serving cell is higher than a first threshold; a difference between signal quality of a measurement signal for the target cell and signal quality of a specific signal of a serving cell is higher than a second threshold; signal quality of the target cell and/or signal quality of a measurement signal for the target cell is higher than a third threshold; and signal quality of a serving cell and/or signal quality of a specific signal of the serving cell is lower than a fourth threshold. Herein, the measurement signal for the target cell is, for example, an SSB/CSI-RS, and correspondingly, the specific signal is a specific SSB/CSI-RS of the serving cell. The specific SSB/CSI-RS may be an optimal SSB/CSI-RS of the serving cell or an SSB of the serving cell on the same QCL relationship chain as a currently activated TCI, and an associated L3 CSI-RS.

This application is described in detail below with reference to specific embodiments.

In a specific embodiment of this application, as shown in FIG. 4, a cell measurement reporting and change process may include the following steps.

Step 1: The base station configures an L3 measurement object (Measurement object, MO) for UE based on a deployment situation. The configuration of each measurement object includes at least a measurement reference signal configuration, such as a frequency configuration for SSB/CSI-RS, a measurement time window configuration (SSB Measurement Timing Configuration, SMTC), or the like.

Step 2: The UE performs, based on the MO configuration, measurement for intra-frequency or inter-frequency serving cell and neighboring cell and performs a search process for the neighboring cell. If a neighboring cell is discovered through a neighboring cell search process, this neighboring cell is subsequently measured at a specific time interval. Based on a measurement result, the UE determines whether a condition within a reported event corresponding to the MO is satisfied. If the condition is satisfied, the UE reports the measurement result via L3 MR. If the condition is not satisfied, the UE continues to perform regular cell discovery and cell measurement processes for the neighboring cell.

In this measurement process, the UE may use a coarse beam (for FR2 UE) and coarse synchronization for measurement.

In this measurement process, the neighboring cell search process is completed through an SSB. If a measurement reference signal of a neighboring cell does not include an SSB (that is, including only CSI-RS), the UE performs neighboring cell discovery and measurement through a frequency layer (frequency layer) corresponding to an associated SSB (associated SSB) of the neighboring cell (note: the neighboring cell herein broadly refers to all inactive intra-frequency and inter-frequency cells, including already deactivated secondary cells (which are actually serving cells)).

Step 3: The base station configures, for one or more MOs, lower-layer (for example, L1/L2) reporting of an L3 measurement result for the UE. Based on this configuration, the UE, after being triggered by lower-layer signaling of the base station, can quickly report the L3 measurement result to the network. The lower-layer signaling includes a MAC CE or DCI.

Step 4: The UE performs an L3 measurement based on the MO configuration. After reception of the first signaling (for example, lower-layer trigger signaling), within the first duration, the UE reports the L3 measurement result in a predetermined format via an uplink MAC CE or UCI. Optionally, when reporting the measurement, the UE may further include one indicator to indicate whether the current measurement result is valid.

Optionally, for the reported measurement result, if it is a measurement result obtained by the UE within a second duration before reporting and another predefined condition is satisfied (that is, the second condition), the measurement result is valid; otherwise, the measurement result is invalid.
✔ The second duration is predefined.
✔ An indication for the validity of the result may be a one-bit indicator or a set of predefined reporting identifiers. For example, when -Inf is reported, it indicates that the result is invalid. Herein, -Inf represents reporting of a minimum value in a predefined measurement result value bit mapping table, such as "RSRP < -156 dBm", or the like.
✔ The another predefined condition includes one or more of the following options:
   ▪ during the measurement, a signal-to-noise ratio of a corresponding signal is greater than or equal to a predefined threshold; and
   ▪ the measurement result of the measurement satisfies the predefined condition. Herein, the measurement result includes, but is not limited to, any one of RSRP, RSRQ, and SINR. The predefined condition is, for example, the RSRP being greater than the predefined threshold.

It should be noted that the predefined condition herein may be different from the predefined condition for triggering L3 MR reporting. For example, if the first signaling is L1/L2 reporting trigger signaling for the L3 measurement, the predefined condition herein is generally easier to trigger compared to an L3 MR reporting condition, thereby ensuring that the network can obtain an L3 measurement result in a timely manner and indicate the UE to perform an L1 measurement.

Optionally, after receiving lower-layer (for example, L1/L2) trigger signaling, the UE needs to immediately start an L3 measurement for the MO, that is, preferentially performing an L3 measurement for the MO. Thus, the UE can perform the measurement preferentially for a specific frequency point according to an indication of the network and report a measurement result within a specific duration, which can accelerate, based on the requirement of the network, the measurement for the frequency point by the UE, thereby improving the mobility performance. The measurement herein includes one or more of the following options:
✔ If the measurement for the MO is an L3 intra-frequency measurement (for example, a measurement for an inactive secondary cell), and a measurement for a gap (gap) is not required, the UE preferentially performs the measurement for the MO within the first duration, and after the preferential measurement is completed or when the first duration expires, a normal measurement process is resumed, to be specific, the corresponding measurement is to be completed within a predefined time required by the measurement. Considering that L3 intra-frequency measurements for secondary cells need to share a same set of baseband processing resources, that is, there is a case in which multiple L3 MOs share one set of baseband processing resources, there is a carrier-specific sharing factor in the predefined time required by the measurement. A measurement time requirement with this factor applies only outside the first duration.
✔ If the measurement for the MO is an L3 inter-frequency measurement and a measurement for a gap (gap) is required, the UE preferentially measures the MO within the first duration, and after the preferential measurement is completed or when the first duration expires, a normal measurement process is resumed, to be specific, the corresponding measurement is to be completed within a predefined time required by the measurement. Considering that L3 inter-frequency measurements for secondary cells need to share a same set of measurement gaps (gaps), that is, there is a case in which multiple L3 MOs occupy the measurement gaps (gaps) in turn for measurement, there is a carrier-specific sharing factor in the predefined time required by the measurement. A measurement time requirement with this factor applies only outside the first duration.
✔ If it is feasible to perform the measurement for the MO within a shorter period, for example, the UE activates a secondary carrier or an RF module corresponding to a frequency point for the MO in advance and performs the measurement within an SMTC period, the UE preferentially uses this method to quickly complete the measurement.
✔ If the measurement for the MO is mainly performed for a specific cell such as cell 1, and it is feasible for the UE to perform the measurement with fewer samples (samples), for example, signal quality of cell 1 satisfies a predefined condition, or a signal-to-noise ratio of at least one measured signal of cell 1 is higher than a predefined threshold, the UE performs the measurement with fewer samples.
✔ If the UE has already obtained a measurement result that meets a validity requirement after receiving and decoding the first signaling, the UE skips the measurement for the MO.
✔ If the measurement for the MO is mainly performed for a specific cell such as cell 1, and the UE has not discovered cell 1 after receiving and decoding the first signaling, there are the following options.
   ▪ Option 1: The UE skips the measurement for the MO and reports an invalid result in advance.
   ▪ Option 2: The UE performs cell discovery for cell 1, that is, detection of a primary synchronization signal (Primary Synchronization Signal, PSS)/secondary synchronization signal (Secondary Synchronization Signal, SSS); if cell discovery fails, the UE skips cell 1 and reports an invalid result in advance; if cell discovery succeeds, the UE continues to measure cell 1, and reports, after the measurement is completed, the measurement result at a reporting occasion that is determined based on the first duration.

Step 5: After receiving the measurement result, the base station, through a downlink MAC CE or DCI (that is, downlink L1/L2 signaling), indicates the UE to perform a first operation, where the first operation includes one or more of the following operations but does not include an L3 measurement process.
5-a. Indicate the UE to activate the target cell through a downlink MAC CE, where
   ◆ the target cell may be a candidate target cell for handover or a secondary cell in CA; and
   ◆ the activating the target cell includes establishing synchronization in the target cell, for example, at least including: establishing downlink synchronization in the target cell and/or performing an L1 measurement on the target cell.
      - Regarding the downlink synchronization:
         ■ if the base station indicates the UE to perform downlink synchronization and indicates the TCI for the target cell, the UE performs fine synchronization based on a downlink signal indicated in the TCI;
         ■ if the base station indicates the UE to perform downlink synchronization but does not indicate the TCI for the target cell, the UE performs downlink coarse synchronization based on a reported SSB;
         ■ if the base station only indicates the UE to perform an L1 measurement and does not indicate the UE to perform downlink synchronization, the UE performs the L1 measurement using the coarse synchronization for L3 measurement.
   ● The L1 measurement on the target cell refers to that the UE performs a measurement based on an L1 measurement configuration, including an L1-RSRP measurement and/or an L1-SINR measurement.
      ■ If the base station only indicates the UE to perform an L1 measurement and does not indicate the UE to perform downlink synchronization, the UE performs the L1 measurement using the coarse synchronization for L3 measurement.
      ■ If the base station indicates the UE to perform an L1 measurement and indicates the UE to perform downlink synchronization, the UE performs the measurement using a downlink synchronization result.
      ■ In L1 measurement reporting, the UE may additionally indicate a synchronization type of a current measurement through 1-2 bits, for example, L3 coarse synchronization, SSB coarse synchronization, or fine synchronization.
      ■ For an L1 measurement with coarse synchronization, if an L1-SINR measurement is required, the accuracy of the L1-SINR measurement is limited. For an L1 measurement with fine synchronization, if an L1-SINR measurement is required, the accuracy of the L1-SINR measurements is not limited.
      ■ In this measurement process, the FR2 UE uses a fine beam for measurement.
5-b. The UE is instructed to activate the target cell and the TCI on the target cell through a downlink MAC CE, where the TCI is a TCI used by the base station and the UE for PDSCH/PDCCH/PUSCH/PUCCH transmissions on the target cell.
5-c. The UE is instructed to perform handover through a downlink MAC CE, that is, changing a current primary cell or primary secondary cell (PSCell) to a candidate target cell for handover or to a secondary cell in CA.
5-d. The UE is instructed to perform handover through a downlink MAC CE and to simultaneously indicate a target TCI on the target cell.

Optionally, in the configuration described in Step 3, the base station can specify a type of trigger signaling for fast reporting. For example, if the trigger signaling is a MAC CE, the base station specifies one or more of the following based on configuration information.

Configuration 1: A frequency point/MO index mapping relationship in the MAC CE, for example, a mapping relationship from a frequency point/MO index in the MAC CE to a codepoint (codepoint) in the MAC CE. The measurement object index and codepoint mapping relationship herein also includes an indirect mapping between an MO index and a MAC CE codepoint. For example, the measurement object index and codepoint mapping relationship is configured through a direct mapping between the MAC CE codepoint and a measurement configuration set and a mapping between the measurement configuration set and the measurement object.

For example, the following Table 1 provides an example of a specific form of a measurement object index bit mapping table.

**Table 1**

| Configuration information codepoint (2 bits) | Measurement object index |
|---|---|
| 00 | ID = 0 |
| 01 | ID =4 |
| 10 | ID = 5 |
| 11 | ID =6 |

Optionally, the frequency point/MO index may further be associated with one or more cell identifiers IDs, to be specific, it may also be a mapping from a frequency point/MO index and a whitelist cell list to a codepoint in the MAC CE. The whitelist cell list may correspond to a cell identifier (Identifier, ID) of a preconfigured cell for licensed-assisted access traffic management (Licensed-Assisted Access Traffic Management, LTM). If a cell ID is associated, the UE focuses on a measurement for this cell, and may use fewer samples for at least one measured cell during measurement.

Configuration 2: Configuration information for the first duration, such as a size/value of the first duration. After the MAC CE is issued, the UE needs to report an L3 measurement result within the first duration after receiving the MAC CE. The configuration for the first duration may be a bit mapping table of a predefined or configured duration. For example, the following Table 2 provides an example of a specific form of a duration bit mapping table for the first duration.

**Table 2**

| Configuration information codepoint (2 bits) | First duration |
|---|---|
| 00 | 5 ms |
| 01 | 10 ms |
| 10 | 20 ms |
| 11 | 40 ms |

It should be noted that the first duration in the above Table 2 is measured in milliseconds ms, but this application is not limited to this, and the first duration may also be represented by the number of slots. This is determined based on actual needs.

In a case that a first event is satisfied, the UE needs to report L3 measurement information at a reporting occasion that is determined based on the first duration, where specific details may be as follows.

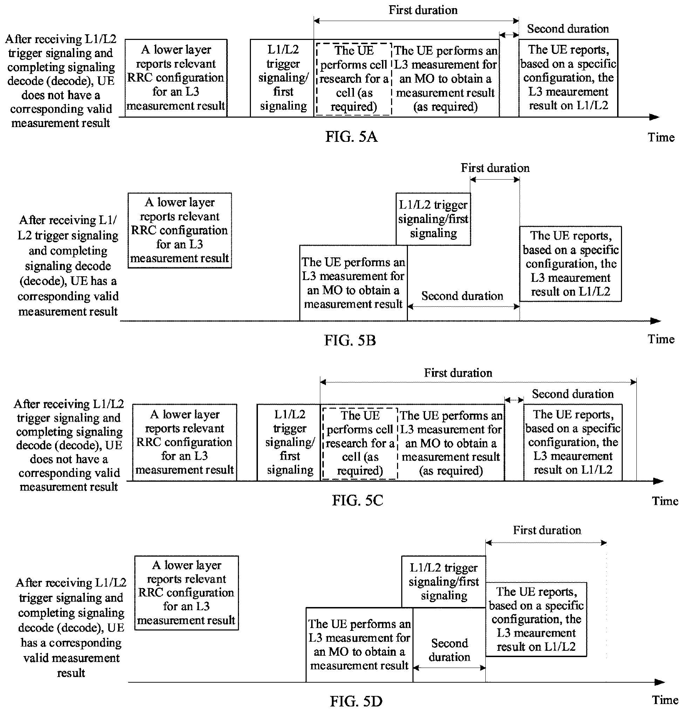

Option 2-1: The network configures the size of the first duration, and the UE, after receiving the trigger signaling, reports the L3 measurement result of a corresponding cell in an uplink MAC CE or UCI after an interval of the first duration, to be specific, an interval between a reception time of the trigger signaling and a reporting time corresponding to a first reporting occasion is the first duration, as shown in FIG. 5A and FIG. 5B.

Option 2-2: The network configures a first timer corresponding to the first duration, and the UE, after receiving the trigger signaling, reports the L3 measurement result of a corresponding cell in an uplink MAC CE or UCI before the timer expires (expires), to be specific, the first duration is a maximum duration between the reception time of the trigger signaling and a reporting time of the measurement result, and the terminal determines the reporting occasion based on its own measurement state and reports the measurement result at the reporting occasion determined by itself, as shown in FIG. 5C and FIG. 5D.

Configuration 3: Whether the UE needs to carry an indication for the validity of the measurement result in the reporting. Specifically, the following several implementation options are provided.

Option 3-1: If the UE, when reporting an L3 measurement result, only and exclusively has a measurement result outside the second duration before reporting but the measurement result satisfies another predefined condition, when Configuration 3 provides an indication, the UE reports a corresponding measurement result and marks the result as invalid; and when Configuration 3 provides no indication, the UE reports an invalid result in a manner similar to -Inf.

Option 3-2: When Configuration 3 provides an indication, if the UE, when reporting an L3 measurement result, does not have any valid measurement result, the reporting of the UE includes an invalid indicator and -Inf is assigned to the measurement result; and if there is a valid measurement result, the reporting of the UE includes a valid indicator, and the measurement result is reported. When Configuration 3 provides no configuration, the foregoing valid and invalid indicators are not reported.

Configuration 4: A format of the reported result includes, but is not limited to, the following options.

Option 4-1: K1 optimal cell IDs that meet the condition and measurement values corresponding to the IDs, such as RSRP, RSRQ, and/or SINR.

Option 4-2: K1 optimal cell IDs that meet the condition, the measurement values corresponding to the IDs, IDs of K2 optimal SSB/CSI-RSs under the optimal cells, and measurement values corresponding to the SSB/CSI-RSs.

Option 4-3: K1 optimal cell IDs that meet the condition, IDs of K2 optimal SSB/CSI-RSs under the optimal cells, and the measurement values corresponding to the SSB/CSI-RSs of the corresponding cell IDs.

Option 4-4: IDs of K2 optimal SSB/CSI-RSs that meet the condition under specified cells, and measurement values corresponding to SSB/CSI-RSs of the corresponding cell IDs.

In the above options, K1 ≥ 1, and K2 ≥ 1. Optionally, each option may additionally include IDs and measurement values of K3 optimal SSB/CSI-RSs under serving cells, and K3 ≥ 1.

Preferably, K1, K2, and K3 are all equal to 1 or at least not greater than 2.

Configuration 5: A condition for reporting a measurement result at least includes that the cell and measurement signal quality corresponding to the result satisfy a predefined condition (that is, a measurement allowed condition), and also includes, but is not limited to the following options.

Option 5-1: A signal quality difference between the cell and/or SSB/CSI-RS of the reported result of [SSB/CSI-RS Class A3 condition] and a specific SSB/CSI-RS under a serving cell is higher than a first threshold. The specific SSB/CSI-RS under a serving cell may be an optimal SSB/CSI-RS under the serving cell or an SSB of the serving cell on the same QCL relationship chain as a currently activated TCI, and an associated L3 CSI-RS. It should be noted that the first threshold herein may be a negative value, to be specific, an SSB/CSI-RS of a target cell does not necessarily need to be higher than the SSB/CSI-RS of the serving cell.

Option 5-2: Signal quality of the cell and/or SSB/CSI-RS of the reported result of [SSB/CSI-RS Class A4 condition] is higher than a specific threshold.

Option 5-3: Signal quality of the cell and/or SSB/CSI-RS of the reported result of [SSB/CSI-RS Class A5 condition] is higher than a specific threshold, and signal quality of a specific SSB/CSI-RS under a serving cell is lower than a specific threshold.

Option 5-4: When the measurement result is reported under [SSB/CSI-RS Class A2 condition], signal quality of a serving cell or a specific SSB/CSI-RS of the serving cell is lower than a specific threshold.

The information reporting method provided by the embodiments of this application may be executed by an information reporting apparatus. In the embodiments of this application, the information reporting apparatus executing the information reporting method is used as an example to describe the information reporting apparatus provided by the embodiments of this application.

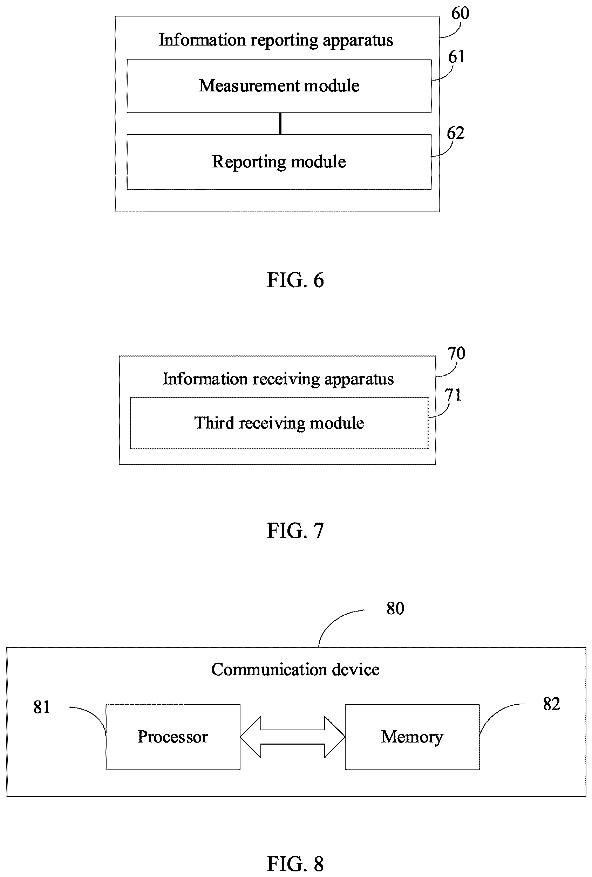

Referring to FIG. 6, FIG. 6 is a schematic structural diagram of an information reporting apparatus according to an embodiment of this application, and the apparatus is applied to a terminal. As shown in FIG. 6, the information reporting apparatus 60 includes:
a measurement module 61, configured to perform measurement on a target cell based on a first configuration, to obtain a measurement result; and
a reporting module 62, configured to report the measurement result in a case that a first event is satisfied; where
the first event includes: the terminal receives first signaling, and within a first duration after reception of the first signaling, the terminal obtains through measurement that signal quality of the target cell satisfies a first condition.

Optionally, the first configuration is a configuration related to an L3 measurement;
and/or the target cell includes at least one of the following:
a candidate target cell for handover, and a secondary cell in a carrier aggregation CA scenario.

Optionally, the first signaling includes at least one of the following:
activation signaling for a secondary cell of the target cell;
activation signaling for lower-layer triggered handover; and
lower-layer reporting trigger signaling for L3 measurement.

Optionally, the performing measurement on a target cell satisfies at least one of the following:
performing measurement on the target cell after reception of the first signaling; and
performing measurement on the target cell preferentially within the first duration.

Optionally, the reporting module 62 is specifically configured to report, in the case that the first event is satisfied, the measurement result at a reporting occasion that is determined based on the first duration after reception of the first signaling.

Optionally, the reporting module 62 is specifically configured to:
report the measurement result based on at least one of the following:
uplink media access control control element MAC CE, and uplink control information UCI.

Optionally, the information reporting apparatus 60 further includes:
a first receiving module, configured to receive second signaling, where the second signaling is used for instructing the terminal to perform a first operation; where
the first operation includes at least one of the following:
   activating the target cell;
   activating the target cell and a TCI for the target cell, where the TCI is a TCI used for uplink and downlink transmission on the target cell; and
   changing a primary cell or a primary secondary cell in which the terminal is located to the target cell.

Optionally, the activating the target cell includes at least one of the following:
establishing synchronization in the target cell; and
performing L1 measurement on the target cell.

Optionally, the establishing synchronization in the target cell includes: establishing downlink synchronization in the target cell;
and/or the L1 measurement includes at least one of the following: layer 1 reference signal received power L1-RSRP measurement, and layer 1 signal to interference plus noise ratio L1-SINR measurement.

Optionally, the second signaling includes at least one of the following:
downlink MAC CE and downlink control information DCI.

Optionally, the measurement result is valid in a case that the terminal obtains the measurement result within a second duration before reporting and a second condition is satisfied, where the second condition includes at least one of the following:
during measurement on the target cell, a signal-to-noise ratio corresponding to a measurement signal for the measurement is greater than or equal to a predefined threshold; and
the measurement result satisfies a predefined condition.

Optionally, the information reporting apparatus 60 further includes:
a first sending module, configured to send first indication information, where the first indication information is used to indicate whether the reported measurement result is valid or invalid.

Optionally, the information reporting apparatus 60 further includes:
a second receiving module, configured to receive a second configuration, where the second configuration is used for configuring at least one of the following:
a frequency point and codepoint mapping relationship in the first signaling, or a measurement object index and codepoint mapping relationship in the first signaling;
a size of the first duration;
indication information carried in a measurement report of the terminal and used to indicate whether the reported measurement result is valid or invalid;
a reporting format of the measurement report; and
the first condition, where the first condition includes at least one of the following: a difference between signal quality of the target cell and signal quality of a specific signal of a serving cell is higher than a first threshold; a difference between signal quality of a measurement signal for the target cell and signal quality of a specific signal of a serving cell is higher than a second threshold; signal quality of the target cell and/or signal quality of a measurement signal for the target cell is higher than a third threshold; and signal quality of a serving cell and/or signal quality of a specific signal of the serving cell is lower than a fourth threshold.

The information reporting apparatus 60 in this embodiment of this application may be an electronic device such as an electronic device having an operating system, or may be a component such as an integrated circuit or a chip in an electronic device. The electronic device may be a terminal or another device other than a terminal. For example, the terminal may include, but is not limited to, the types of the terminal 11 listed above, and another device may be a server, a network attached storage (Network Attached Storage, NAS) or the like. This is not specifically limited in this embodiment of this application.

The information reporting apparatus 60 provided in this embodiment of this application can implement the processes implemented in the method embodiment in FIG. 2, with the same technical effects achieved. To avoid repetition, details are not described herein again.

Referring to FIG. 7, FIG. 7 is a schematic structural diagram of an information reporting apparatus according to an embodiment of this application. The apparatus is applied to a network-side device. As shown in FIG. 7, the information receiving apparatus 70 includes:
a third receiving module 71, configured to receive a measurement result; where
the measurement result is obtained by performing measurement on a target cell based on a first configuration; the measurement result is reported in a case that a first event is satisfied; and the first event includes: the terminal receives first signaling, and within a first duration after reception of the first signaling, the terminal obtains through measurement that signal quality of the target cell satisfies a first condition.

Optionally, the first configuration is a configuration related to an L3 measurement;
and/or the target cell includes at least one of the following:
a candidate target cell for handover, and a secondary cell in a carrier aggregation CA scenario.

Optionally, the first signaling includes at least one of the following:
activation signaling for a secondary cell of the target cell;
activation signaling for lower-layer triggered handover; and
lower-layer reporting trigger signaling for L3 measurement.

Optionally, the information receiving apparatus 70 further includes:
a second sending module, configured to send second signaling, where the second signaling is used for instructing the terminal to perform a first operation; where
the first operation includes at least one of the following:
   activating the target cell;
   activating the target cell and a TCI for the target cell, where the TCI is a TCI used for uplink and downlink transmission on the target cell; and
   changing a primary cell or a primary secondary cell in which the terminal is located to the target cell.

Optionally, the activating the target cell includes at least one of the following:
establishing synchronization in the target cell; and
performing L1 measurement on the target cell.

Optionally, the second signaling includes at least one of the following:
downlink MAC CE and DCI.

Optionally, the information receiving apparatus 70 further includes:
a fourth receiving module, configured to receive first indication information, where the first indication information is used to indicate whether the measurement result is valid or invalid.

Optionally, the method further includes:
a third sending module, configured to send a second configuration to the terminal, where the second configuration is used for configuring at least one of the following:
a frequency point and codepoint mapping relationship in the first signaling, or a measurement object index and codepoint mapping relationship in the first signaling;
a size of the first duration;
indication information carried in a measurement report of the terminal and used to indicate whether the reported measurement result is valid or invalid;
a reporting format of the measurement report; and
the first condition, where the first condition includes at least one of the following: a difference between signal quality of the target cell and signal quality of a specific signal of a serving cell is higher than a first threshold; a difference between signal quality of a measurement signal for the target cell and signal quality of a specific signal of a serving cell is higher than a second threshold; signal quality of the target cell and/or signal quality of a measurement signal for the target cell is higher than a third threshold; and signal quality of a serving cell and/or signal quality of a specific signal of the serving cell is lower than a fourth threshold.

The information receiving apparatus 70 provided in this embodiment of this application can implement the processes implemented in the method embodiments in FIG. 3, with the same technical effects achieved. To avoid repetition, details are not described herein again.

Optionally, as shown in FIG. 8, an embodiment of this application further provides a communication device 80, including a processor 81 and a memory 82. The memory 82 stores a program or instructions capable of running on the processor 81. For example, in a case that the communication device 80 is a terminal, when the program or instructions are executed by the processor 81, the processes of the foregoing information reporting method embodiments are implemented, with the same technical effects achieved. In a case that the communication device 80 is a network-side device, when the program or instructions are executed by the processor 81, the processes of the foregoing information receiving method embodiments are implemented, with the same technical effects achieved. To avoid repetition, details are not described herein again.

An embodiment of this application further provides a terminal, including a processor and a communication interface. The processor is configured to perform measurement on a target cell based on a first configuration to obtain a measurement result. The communication interface is configured to report the measurement result in a case that a first event is satisfied. The first event includes: a terminal receives first signaling, and within a first duration after reception of the first signaling, the terminal obtains through measurement that signal quality of the target cell satisfies a first condition. This terminal embodiment corresponds to the foregoing method embodiments on the terminal side. All implementation processes and implementation manners in the foregoing method embodiments are applicable to this terminal embodiment, with the same technical effects achieved.

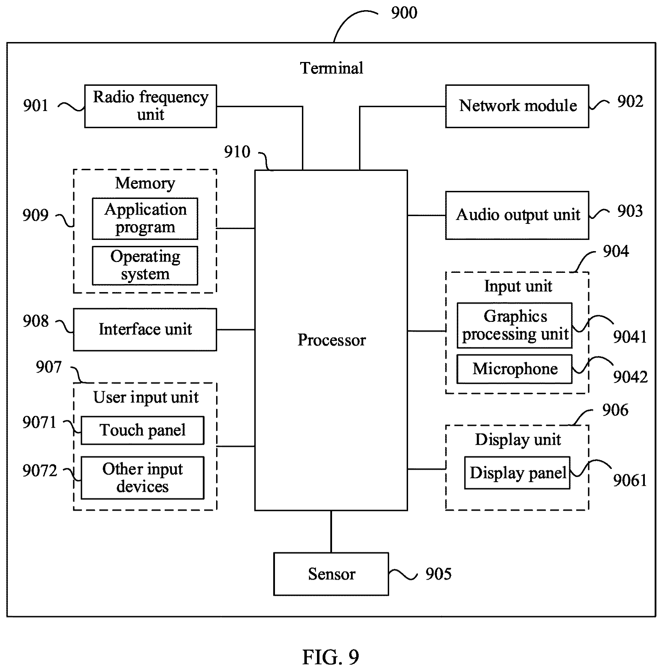

Specifically, FIG. 9 is a schematic diagram of a hardware structure of a terminal implementing an embodiment of this application.

The terminal 900 includes, but is not limited to, at least some of components such as a radio frequency unit 901, a network module 902, an audio output unit 903, an input unit 904, a sensor 905, a display unit 906, a user input unit 907, an interface unit 908, a memory 909, and a processor 910.

It can be understood by persons skilled in the art that the terminal 900 may further include a power supply (for example, a battery) supplying power to the components. The power supply may be logically connected to the processor 910 through a power management system, such that functions such as charge management, discharge management, and power consumption management are implemented using the power management system. The structure of the terminal shown in FIG. 9 does not constitute any limitation on the terminal, and the terminal may include more or fewer components than shown in the figure, or combine some of the components, or have different arrangements of the components. Details are not described herein again.

It should be understood that in this embodiment of this application, the input unit 904 may include a graphics processing unit (Graphics Processing Unit, GPU) 9041 and a microphone 9042. The graphics processing unit 9041 processes image data of a static picture or a video that is obtained by an image capture apparatus (for example, a camera) in a video capture mode or an image capture mode. The display unit 906 may include a display panel 9061. The display panel 9061 may be configured in a form of a liquid crystal display, an organic light-emitting diode display, or the like. The user input unit 907 includes at least one of a touch panel 9071 and other input devices 9072. The touch panel 9071 is also referred to as a touchscreen. The touch panel 9071 may include two parts: a touch detection apparatus and a touch controller. The other input devices 9072 may include, but are not limited to, a physical keyboard, a function button (for example, a volume control button or a power on/off button), a trackball, a mouse, and a joystick. Details are not described herein again.

In this embodiment of this application, the radio frequency unit 901 receives downlink data from a network-side device, and then sends the downlink data to the processor 910 for processing. In addition, the radio frequency unit 901 may send uplink data to the network-side device. Typically, the radio frequency unit 901 includes, but is not limited to, an antenna, an amplifier, a transceiver, a coupler, a low noise amplifier, and a duplexer.

The memory 909 may be configured to store a software program or instructions and various data. The memory 909 may mainly include a first storage area for storing a program or instructions and a second storage area for storing data. The first storage area may store an operating system, an application program or instructions required by at least one function (for example, a sound play function or an image play function), and the like. Additionally, the memory 909 may include a volatile memory or a non-volatile memory, or the memory 909 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 909 in this embodiment of this application includes, but is not limited to, these or any other applicable types of memories.

The processor 910 may include one or more processing units. Optionally, the processor 910 may integrate an application processor and a modem processor. The application processor primarily processes operations involving an operating system, a user interface, an application program, and the like. The modem processor primarily processes radio communication signals, for example, being a baseband processor. It can be understood that the modem processor may alternatively be not integrated in the processor 910.

The processor 910 is configured to perform measurement on a target cell based on a first configuration to obtain a measurement result.

The radio frequency unit 901 is configured to report the measurement result in a case that a first event is satisfied. The first event includes: the terminal receives first signaling, and within a first duration after reception of the first signaling, the terminal obtains through measurement that signal quality of the target cell satisfies a first condition.

The terminal 900 provided in this embodiment of this application can implement the processes implemented in the method embodiment in FIG. 2, with same technical effects achieved. To avoid repetition, details are not described herein again.

An embodiment of this application further provides a network-side device, including a processor and a communication interface. The communication interface is configured to receive a measurement result. The measurement result is obtained by performing measurement on a target cell based on a first configuration; the measurement result is reported in a case that a first event is satisfied; and the first event includes: the terminal receives first signaling, and within a first duration after reception of the first signaling, the terminal obtains through measurement that signal quality of the target cell satisfies a first condition. This network-side device embodiment corresponds to the foregoing network-side device method embodiment. All implementation processes and implementation manners of the foregoing method embodiment are applicable to this network-side device embodiment, with the same technical effects achieved.

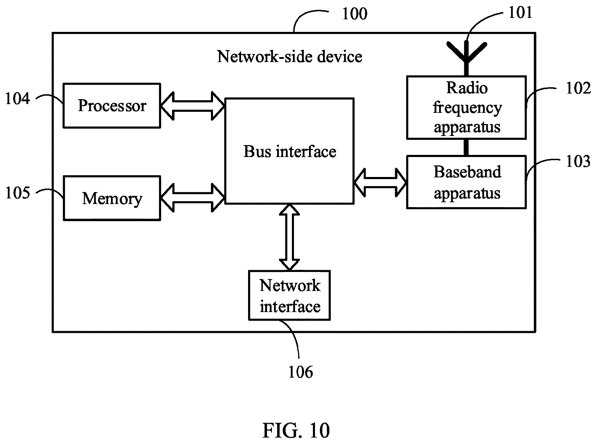

Specifically, an embodiment of this application further provides a network-side device. As shown in FIG. 10, the network-side device 100 includes an antenna 101, a radio frequency apparatus 102, a baseband apparatus 103, a processor 104, and a memory 105. The antenna 101 is connected to the radio frequency apparatus 102. In an uplink direction, the radio frequency apparatus 102 receives information through the antenna 101, and sends the received information to the baseband apparatus 103 for processing. In a downlink direction, the baseband apparatus 103 processes to-be-sent information, and sends the information to the radio frequency apparatus 102; and the radio frequency apparatus 102 processes the received information and then sends the information out through the antenna 101.

The method performed by the network-side device in the foregoing embodiment may be implemented in the baseband apparatus 103, and the baseband apparatus 103 includes a baseband processor.

The baseband apparatus 103 may include, for example, at least one baseband board, where a plurality of chips are disposed on the baseband board. As shown in FIG. 10, one of the chips is, for example, a baseband processor which is connected to the memory 105 through a bus interface, to invoke a program in the memory 105 to perform the operation of the network device shown in the foregoing method embodiment.

The network-side device may further include a network interface 106, where the interface is, for example, a common public radio interface (common public radio interface, CPRI).

Specifically, the network-side device 100 in this embodiment of this application further includes: an instruction or program stored in the memory 105 and capable of running on the processor 104. The processor 104 invokes the instruction or program in the memory 105 to execute the method executed by the modules shown in FIG. 7, with the same technical effects achieved. To avoid repetition, details are not described herein again.

An embodiment of this application further provides a readable storage medium, where the readable storage medium stores a program or instructions, and when the program or instructions are executed by a processor, the processes of the foregoing information reporting method embodiments are implemented, or the processes of the information receiving method embodiments are implemented, with the same technical effects achieved. To avoid repetition, details are not described herein again.

The processor is a processor in the terminal described in the foregoing embodiments. The readable storage medium includes a computer-readable storage medium such as a computer read-only memory ROM, a random access memory RAM, a magnetic disk, or an optical disc.

An embodiment of this application further provides a chip. The chip includes a processor and a communication interface, the communication interface is coupled to the processor, and the processor is configured to run a program or instructions to implement the processes of the foregoing information reporting method embodiments, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program/program product, where the computer program/program product is stored in a storage medium, and the computer program /program product is executed by at least one processor to implement the processes of the foregoing information reporting method embodiments or to implement the processes of the foregoing information receiving method embodiments, with the same technical effects achieved. To avoid repetition, details are not described herein again.

An embodiment of this application further provides a communication system including a terminal and a network-side device. The terminal may be configured to execute the steps of the foregoing information reporting method, and the network-side device may be configured to execute the steps of the foregoing information receiving method.

It should be noted that in this specification, the terms "include", "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. Without more constraints, an element preceded by "includes a..." does not preclude the presence of other identical elements in the process, method, article, or apparatus that includes the element. In addition, it should be noted that the scope of the method and apparatus in the embodiments of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

Based on the description of the foregoing embodiments, persons skilled in the art may clearly understand that the method in the foregoing embodiments can be implemented through software on a necessary hardware platform or certainly through hardware only, but in many cases, the former is a preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. An information reporting method, comprising:
performing, by a terminal, measurement on a target cell based on a first configuration, to obtain a measurement result; and
reporting, by the terminal, the measurement result in a case that a first event is satisfied; wherein
the first event comprises: the terminal receives first signaling, and within a first duration after reception of the first signaling, the terminal obtains through measurement that signal quality of the target cell satisfies a first condition.

2. The method according to claim 1, wherein the first configuration is a configuration related to layer 3 L3 measurement;
and/or
the target cell comprises at least one of the following:
a candidate target cell for handover, and a secondary cell in a carrier aggregation CA scenario.

3. The method according to claim 1, wherein the first signaling comprises at least one of the following:
activation signaling for a secondary cell of the target cell;
activation signaling for lower-layer triggered handover; and
lower-layer reporting trigger signaling for L3 measurement.

4. The method according to claim 1, wherein the performing measurement on a target cell satisfies at least one of the following:
performing measurement on the target cell after reception of the first signaling; and
performing measurement on the target cell preferentially within the first duration.

5. The method according to any one of claims 1 to 4, wherein the reporting the measurement result comprises:
reporting, by the terminal, the measurement result at a reporting occasion that is determined based on the first duration after reception of the first signaling.

6. The method according to any one of claims 1 to 5, wherein the reporting the measurement result comprises:
reporting, by the terminal, the measurement result through at least one of the following:
uplink media access control control element MAC CE, and uplink control information UCI.

7. The method according to any one of claims 1 to 6, wherein the method further comprises:
receiving, by the terminal, second signaling, wherein the second signaling is used for instructing the terminal to perform a first operation; wherein
the first operation comprises at least one of the following:
activating the target cell;
activating the target cell and a transmission configuration indicator TCI for the target cell, wherein the TCI is a TCI used for uplink and downlink transmission on the target cell; and
changing a primary cell or a primary secondary cell in which the terminal is located to the target cell.

8. The method according to claim 7, wherein the activating the target cell comprises at least one of the following:
establishing synchronization in the target cell; and
performing layer 1 L1 measurement on the target cell.

9. The method according to claim 8, wherein
the establishing synchronization in the target cell comprises: establishing downlink synchronization in the target cell;
and/or
the L1 measurement comprises at least one of the following: layer 1 reference signal received power L1-RSRP measurement, and layer 1 signal to interference plus noise ratio L1-SINR measurement.

10. The method according to claim 7, wherein the second signaling comprises at least one of the following:
downlink MAC CE and downlink control information DCI.

11. The method according to claim 1, wherein the measurement result is valid in a case that the terminal obtains the measurement result within a second duration before reporting and a second condition is satisfied; wherein
the second condition comprises at least one of the following:
during measurement on the target cell, a signal-to-noise ratio corresponding to a measurement signal for the measurement is greater than or equal to a predefined threshold; and
the measurement result satisfies a predefined condition.

12. The method according to claim 1, wherein the method further comprises:
sending, by the terminal, first indication information, wherein the first indication information is used to indicate whether the reported measurement result is valid or invalid.

13. The method according to claim 1, wherein the method further comprises:
receiving, by the terminal, a second configuration, wherein the second configuration is used for configuring at least one of the following:
a frequency point and codepoint mapping relationship in the first signaling, or a measurement object index and codepoint mapping relationship in the first signaling;
a size of the first duration;
indication information carried in a measurement report of the terminal and used to indicate whether the reported measurement result is valid or invalid;
a reporting format of the measurement report; and
the first condition, wherein the first condition comprises at least one of the following: a difference between signal quality of the target cell and signal quality of a specific signal of a serving cell is higher than a first threshold; a difference between signal quality of a measurement signal for the target cell and signal quality of a specific signal of a serving cell is higher than a second threshold; signal quality of the target cell and/or signal quality of a measurement signal for the target cell is higher than a third threshold; and signal quality of a serving cell and/or signal quality of a specific signal of the serving cell is lower than a fourth threshold.

14. An information receiving method, comprising:
receiving, by a network-side device, a measurement result; wherein
the measurement result is obtained by performing measurement on a target cell based on a first configuration; the measurement result is reported in a case that a first event is satisfied; and the first event comprises: a terminal receives first signaling, and within a first duration after reception of the first signaling, the terminal obtains through measurement that signal quality of the target cell satisfies a first condition.

15. The method according to claim 14, wherein the first configuration is a configuration related to L3 measurement;
and/or
the target cell comprises at least one of the following:
a candidate target cell for handover, and a secondary cell in a carrier aggregation CA scenario.

16. The method according to claim 14, wherein the first signaling comprises at least one of the following:
activation signaling for a secondary cell of the target cell;
activation signaling for lower-layer triggered handover; and
lower-layer reporting trigger signaling for L3 measurement.

17. The method according to any one of claims 14 to 16, wherein the method further comprises:
sending, by the network-side device, second signaling, wherein the second signaling is used for instructing a terminal to perform a first operation; wherein
the first operation comprises at least one of the following:
activating the target cell;
activating the target cell and a TCI for the target cell, wherein the TCI is a TCI used for uplink and downlink transmission on the target cell; and
changing a primary cell or a primary secondary cell in which the terminal is located to the target cell.

18. The method according to claim 17, wherein the activating the target cell comprises at least one of the following:
establishing synchronization in the target cell; and
performing L1 measurement on the target cell.

19. The method according to claim 14, wherein the method further comprises:
receiving, by the network-side device, first indication information, wherein the first indication information is used to indicate whether the measurement result is valid or invalid.

20. The method according to claim 14, wherein the method further comprises:
sending, by the network-side device, a second configuration to a terminal, wherein the second configuration is used for configuring at least one of the following:
a frequency point and codepoint mapping relationship in the first signaling, or a measurement object index and codepoint mapping relationship in the first signaling;
a size of the first duration;
indication information carried in a measurement report of the terminal and used to indicate whether the reported measurement result is valid or invalid;
a reporting format of the measurement report; and
the first condition, wherein the first condition comprises at least one of the following: a difference between signal quality of the target cell and signal quality of a specific signal of a serving cell is higher than a first threshold; a difference between signal quality of a measurement signal for the target cell and signal quality of a specific signal of a serving cell is higher than a second threshold; signal quality of the target cell and/or signal quality of a measurement signal for the target cell is higher than a third threshold; and signal quality of a serving cell and/or signal quality of a specific signal of the serving cell is lower than a fourth threshold.

21. An information reporting apparatus, comprising:
a measurement module, configured to perform measurement on a target cell based on a first configuration, to obtain a measurement result; and
a reporting module, configured to report the measurement result in a case that a first event is satisfied; wherein
the first event comprises: a terminal receives first signaling, and within a first duration after reception of the first signaling, the terminal obtains through measurement that signal quality of the target cell satisfies a first condition.

22. An information receiving apparatus, comprising:
a third receiving module, configured to receive a measurement result; wherein
the measurement result is obtained by performing measurement on a target cell based on a first configuration; the measurement result is reported in a case that a first event is satisfied; and the first event comprises: a terminal receives first signaling, and within a first duration after reception of the first signaling, the terminal obtains through measurement that signal quality of the target cell satisfies a first condition.

23. A terminal, comprising a processor and a memory, wherein the memory stores a program or instructions capable of running on the processor, and when the program or instructions are executed by the processor, the steps of the information reporting method according to any one of claims 1 to 13 are implemented.

24. A network-side device, comprising a processor and a memory, wherein the memory stores a program or instructions capable of running on the processor, and when the program or instructions are executed by the processor, the steps of the information receiving method according to any one of claims 14 to 20 are implemented.

25. A readable storage medium, wherein the readable storage medium stores a program or instructions, and when the program or instructions are executed by a processor, the information reporting method according to any one of claims 1 to 13 are implemented, or the steps of the information receiving method according to any one of claims 14 to 20 are implemented.
